# EUROPÄISCHE PATENTSCHRIFT

(11) **EP 1 688 672 B1**
(45) Veröffentlichungstag und Bekanntmachung des Hinweises auf die Patenterteilung: **01.04.2020**
(21) Anmeldenummer: 06002461.9
(22) Anmeldetag: 07.02.2006
(51) Int. Cl.: F24D 3/12, F24D 3/16

(54) **Unterkonstruktion**
Supporting construction
Construction porteuse

(30) Priorität: 07.02.2005 DE 102005005755
(43) Veröffentlichungstag der Anmeldung: 09.08.2006
(73) Patentinhaber: Klima-Top GmbH, 87700 Memmingen (DE)
(72) Erfinder: Bühler, Armin, Frechenrieden 87733 Markt Rettenbach (DE)
(74) Vertreter: Patentanwälte Olbricht, Buchold, Keulertz Partnerschaft mbB

(56) Entgegenhaltungen:
- EP-A2- 1 184 638
- DE-A1- 3 331 252
- US-B1- 6 283 382

## Beschreibung

Die Erfindung betrifft eine Unterkonstruktion für eine Heizung beziehungsweise Kühlung nach dem Wärmestrahlungssystem, bestehend aus einem Profil, das ein Rohr für das Heiz- beziehungsweise Kühlmedium fixierend aufzunehmen vermag und das an einer Baukonstruktion, wie zum Beispiel an einer vorhandenen Decken- oder Wandkonstruktion eines Bauwerkes befestigbar ist. Wärmetauscher und Heizungselemente, die insbesondere an Decken- oder Wandkonstruktionen eines Bauwerkes befestigt werden können, sind bekannt. Diese Wärmetauscher oder Heizungselemente benötigen in der Regel eine Unterkonstruktion, an denen beispielsweise vorgefertigte, als Register ausgebildete, medienführende Leitungen eines Wärme- oder Kühlsystemes befestigt werden können. Derartige Leitungen sind beispielsweise als vorgefertigte Platten bekannt, die dann abschnittsweise an dem Bauwerk an der dafür vorgesehenen Stelle angeordnet werden müssen. Das Problem dabei ist, daß diese vorgefertigten Einheiten jeweils abschnittsweise aneinandergefügt werden müssen, so daß diese Einheiten entweder für bestimmte Raumgrößen speziell angefertigt werden müssen, was sehr kostenintensiv ist, da diese Platten auch nur bestimmte Größen aufweisen können, um dann noch transportiert und montiert werden zu können. Des Weiteren muß ein sehr genaues, millimetergenaues Aufmaß genommen werden, um dann diese Platten anfertigen zu können. Der Aufwand dafür ist beträchtlich, so daß aus Kostengründen allein die Sache als nicht praktikabel erscheint. Des Weiteren werden diese vorgefertigen Einheiten dann sowohl beabstandet von der Unterkonstruktion des Bauwerkes, aber auch beabstandet zu einer gegebenenfalls abdeckenden Schicht, wie zum Beispiel einer Gipskartonplatte oder dergleichen angeordnet, wodurch die Heizung sehr träge und uneffizient wird.

Es ist weiterhin dann notwendig, Dämmschichten vorzusehen, die eine Abstrahlung der Wärme zum Bauwerk hin verhindern, aber eine Abstrahlung zum Raum hin fördern. Eine derartige Heizung wirkt auch deshalb sehr träge, da eine direkte Kontaktierung des wärmeleitenden Mediums von den Rohren zur Abstrahlfläche nicht gegeben ist.

Es sind auch Lösungen bekannt, bei denen eine aus Metall gebildete Abstrahlfläche, den Abschluß sozusagen als abschließende Schicht der Decken- oder Wandkonstruktion bildet. Dabei sind dann diese Abstrahlschichten allerdings aus metallischen Werkstoffen, wodurch zwar die Wärmestrahlung günstig beeinflußt wird, jedoch im Eigenheim- beziehungsweise Wohnungsbaubereich nicht einsetzbar sind, da sie formästhetischen Ansprüchen nicht genügen. Durch die Verbindung mehrerer vorgefertigter Einheiten an einer Decke eines Raumes bestehen des Weiteren Verbindungsstellen, die zum einen die Gefahr von Undichtigkeiten beinhalten und sich zum anderen strömungstechnisch ungünstig auswirken. Bringt man eine solche Abschlußschicht oder -platte an, die im Wohnungsbau üblich ist, entstehen die vorher beschriebenen Nachteile. Zudem muß eine zusätzliche Konstruktion zur Befestigung vorgesehen werden.

Es sind auch Elemente bekannt, die im Prinzip eine Montage von oben für die medienführenden Rohrleitungen vorsehen. Die Rohre sind dann entweder noch am Boden in die entsprechenden Vorrichtungen einzulegen und dann gemeinsam mit dem Befestigungs- und Abschlußprofil und gegebenenfalls mit eventuell vorgesehenen Wärmedämmschichten angehoben und dann an einer Unterkonstruktion der Decke oder der Wand befestigt werden. Diese Verfahrensweise ist äußerst ungünstig. Des Weiteren ist auch hier eine glatte und den ästhetischen Ansprüchen von Wohnräumen gefertigte Decke nicht möglich. Man spricht dabei von sogenannten untergehängten oder vorgebauten Konstruktionen. Der Aufwand, um diese Konstruktionen vor Ort an der Baustelle anzubringen, ist enorm. Des Weiteren sind auch hier wieder entsprechende Rastermaße vorgegeben, die einen Einsatz zum Beispiel in der Bauwerkssannierung nicht ermöglichen.

Es ist auch ein Bauwerkskonstruktionsprofil für Dacheindeckungen oder zum Aufbau von Fassadenelementen bekannt, bei dem das Rohr an der Oberfläche des Profils befestigt wird, um darunterliegend eine abgeschlossene Kammer auszubilden. Derartige Baukonstruktionsprofile dienen beispielsweise der Befestigung der Rohre eines Klimadaches. An einer Fassade als Absorber, um beispielsweise Sonnenenergie für die Erwärmung von Wasser zu nutzen. Der Abstand der Rohre von der Oberfläche ist bewußt weit gewählt, um darunterliegend eine abgeschlossene Kammer sozusagen als Wärmepuffer auszubilden. Ein derartiges Baukonstruktionsprofil eignet sich nicht für die Befestigung einer nachträglich in ein Bauwerk einzubringende Heizung beziehungsweise Kühlung insbesondere nach dem Wärmestrahlungssystem.

Es ist weiterhin bekannt, bestimmt Strahlelemente zum Abstrahlen von Wärme und Kälte vorzusehen, bei denen das Strahlelement beziehungsweise der Abstrahlkörper eine große Oberfläche dadurch erreicht, daß verschiedene Abwinkelungen beziehungsweise Abbiegungen vorgesehen sind, die die Abstrahlfläche bilden. Eine derartige Oberfläche ist bestenfalls für Industriebauten oder Büro- beziehungsweise Verkaufsräume geeignet. Im Wohnungsbau werden derartige Elemente nicht eingesetzt werden können, da sie den formästhetischen Ansprüchen nicht genügen. Zum anderen sind die bereits beschriebenen Nachteile einer zusätzlich notwendigen Unterkonstruktion zur Anbringung dieser Profile notwendig. Die Montage selbst ist äußerst schwierig, weil auch hier das Rohr oder das Rohrregister vor der eigentlichen Anbringung an der Decke eingelegt sein muß.

Das Dokument EP 1 184 638 A2 offenbart ein Wärmeleitprofil, das insbesondere vorgesehen ist zum Einbau in Wärmetauscherdecken, mit einem bandartigen Basiselement, mit in dessen Längsrichtung symmetrisch verlaufenden, auf der Oberseite angeformten, nach oben weisenden Verbindungsstegen und mit einer mittig dazwischen am Basiselement angeformten Einrichtung zur formschlüssigen Aufnahme eines Wärmetauscherrohrs.

Das Dokument DE 33 31 252 A1 offenbart ein platten- oder streifenförmiges Baukonstruktionsprofil aus Metall mit einer Deckschale und Profilstegen, in die Rohre oder Halter einclipsbar sind. Das Baukonstruktionsprofil ist dabei so ausgebildet, dass die Profilstege neben einem an die Deckschale angrenzenden, zum Einclipsen der Rohre vorgesehenen Halteabschnitt noch einen Kammerabschnitt aufweisen, dessen Wände zusammen mit dem eingeclipsten Rohr eine am Umfang abgeschlossene Kammer bilden. Die Baukonstruktionsprofile sind als Profile für Dacheindeckungen oder zum oder zum Aufbau von Fassadenelementen verwendbar.
Das Dokument US 6,283,382 B1 offenbart eine Befestigungsplatte zum Befestigen eines Heizungsrohrs einer Fußbodenheizung. Die Befestigungsplatte ist flach ausgebildet und hat eine Nut in ihrer Oberfläche sowie eine Anzahl von Füßen darunter. Dieses Dokument offenbart eine Unterkonstruktion gemäß dem Oberbegriff des Anspruchs 1.

Ausgehend von diesem Stand der Technik ist es Aufgabe der Erfindung, eine Unterkonstruktion für eine Heizung beziehungsweise Kühlung vorzuschlagen, die die vorher beschriebenen Nachteile des Standes der Technik nicht mehr aufweist.
Die Erfindung geht von dem oben beschriebenen Stand der Technik aus und schlägt zur Lösung der gestellten Aufgabe eine Unterkonstruktion für eine Heizung beziehungsweise Kühlung nach Anspruch 1 vor. Diese bestehet aus einem Profil, das ein Rohr für das Heiz- beziehungsweise Kühlmedium fixierend aufzunehmen vermag und das an einer Baukonstruktion, wie zum Beispiel an einer vorhandenen Decken- oder Wandkonstruktion eines Bauwerkes befestigbar ist, welche sich dadurch auszeichnet, daß das Profil wenigstens ein Befestigungsmittel zur Befestigung an der Baukonstruktion, wenigstens einen Halteabschnitt für das Rohr sowie wenigstens einen Kontaktabschnitt für die wärme- oder kälteabstrahlende Abschlußplatte oder -schicht aufweist.
Durch diese Konstruktion gelingt es jetzt, zunächst die Unterkonstruktion an der Baukonstruktion, zum Beispiel an der Wand oder an der Decke zu befestigen, was durch die Ausgestaltung der Unterkonstruktion relativ einfach ist. Es wird demnach zunächst die Unterkonstruktion an die vorhandene Decken- oder Wandkonstruktion angebracht. Dies geschieht mit üblichen und für die jeweilige Ausbildung der Decke oder Wand geeigneten Befestigungsmitteln. Dann kann in den Halteabschnitt für das Rohr ein entsprechendes Rohr eingelegt werden, was erst jetzt, nach Anbringen der gesamten Unterkonstruktion an der Decke notwendig beziehungsweise möglich ist. Dadurch ergibt sich jetzt auch die Möglichkeit, ein sogenanntes Endlosrohr zu verwenden, was lediglich an den Verbindungsstellen der Medienzu- beziehungsweise -ableitung dann noch verbunden werden muß. Dadurch kann man sozusagen bis an die Grenze der hydraulischen Möglichkeiten gehen, da gerade aufgrund der Möglichkeit, ein Endlosrohr in einem Raum vorzusehen, die Durchflußwiderstände gering gehalten werden, was zu einer Erhöhung der Durchflußgeschwindigkeit aufgrund der Verringerung der Widerstände führt. Beim Stand der Technik waren entsprechend der Anzahl der verwendeten vorgefertigten Plattenelemente entsprechende Verbindungsstücke beziehungsweise Fittings vorzusehen, die hier zum einen die Undichtigkeiten als Gefahr in sich bargen und zum anderen strömungstechnisch ungünstig sind. Diese Nachteile werden durch die erfindungsgemäße Lösung jetzt komplett beseitigt.

Dadurch, daß jetzt wenigstens ein Kontaktabschnitt als Auflage für eine wärme- oder kälteabstrahlende Abschlußplatte oder Abschlußschischt in der Unterkonstruktion vorgesehen ist, wird, neben den bereits beschriebenen Effekten, daß die Montage mit der erfindungsgemäßen Unterkonstruktion verbessert wird, auch gleichzeitig die Wärmeabstrahlung verbessert. Die Unterkonstruktion leitet beispielsweise die Wärme oder Kälte aus dem Medium in dem Rohr durch das Profil zu der Auflage für die wärme- oder kälteabstrahlende Abschlußplatte oder -schicht. Dadurch entstehen hier kaum oder nur geringste Wärmeverluste.

Bei den Lösungen nach dem Stand der Technik ergab es sich, daß allein aufgrund der Lösung von Rohrregistern beziehungsweise Teilen dieser Register aus ihrer eigentlichen Befestigung und einem damit nicht mehr vorhandenen direkten Kontakt, erhebliche Verluste beim Wärmeübergang auftraten. Dadurch, daß jetzt die erfindungsgemäße Unterkonstruktion sowohl den Halteabschnitt für das Rohr als auch die Auflage für eine wärme- oder kälteabstrahlende Abschlußplatte aufweist, kann dieser Wärmeübergang optimiert werden, wodurch erstens die Reaktionsgeschwindigkeit einer solcher Wand- oder Deckenheizung verbessert wird und zweitens Energie effizienter ausgenutzt wird.

Die erfindungsgemäße Unterkonstruktion wie zuvor beschrieben stellt demnach ein Profil zur Verfügung, in dem zumindest abschnittsweise ein Endlosrohr befestigt beziehungsweise fixiert wird. Das Profil wird, entsprechend der beschriebenen Aus- oder Weiterbildung in so vielen Abschnitten an der Wand oder Decke befestigt, daß die Decke ausreichend mit wärme- beziehungsweise kälteführenden Medienrohren versehen werden kann. Anschließend wird das Endlosrohr in die dann bereits fixierten Profile der Unterkonstruktion eingelegt und satt eingedrückt. Aufgrund der Verwendung von flexiblen Endlosrohren, die für den Einsatz in Decken- beziehungsweise Fußbodenheizungen bekannt sind, kann man jetzt das Rohr ohne Trennung endlos in dem Raum verlegen und schließt es dann lediglich mit seinem Anfang und mit seinem Ende an die jeweiligen Medienzu- beziehungsweise -ableitung an.

Erfindungsgemäß ist vorgesehen, daß an dem Profil wenigstens ein Kontaktabschnitt für die Befestigung und Kontaktierung der abstrahlenden Abschlußplatte beziehungsweise Abschlußschicht vorgesehen ist und das Profil einen der Form des Rohres entsprechenden Halteabschnitt aufweist, der eine von der Baukonstruktion im eingebauten Zustand wegweisende Aufnahmeöffnung für das Rohr besitzt. Es ist ein sehr wesentlicher Bestandteil der Erfindung, daß zum einen ein möglichst großer Kontaktabschnitt für die Befestigung und Kontaktierung der abstrahlenden Abschlußplatte vorgesehen ist und zum anderen die Aufnahmeöffnung des Befestigungsabschnittes zum Raum hinweist, so daß eben das Rohr erst nach der Befestigung der Unterkonstruktion an der Baukonstruktion eingelegt beziehungsweise eingedrückt werden kann. Dadurch erspart man sich die aufwendigen Arbeiten, wie sie beispielsweise bei Unterhangdecken und bekannten abgehängten Konstruktionen notwendig sind. Dort ist es immer notwendig, entsprechende Träger einzuziehen, an denen Befestigungsmittel eingehängt oder befestigt werden und an denen dann die Unterhangkonstruktion angehängt wird. Des Weiteren benötigt man gegebenenfalls auch noch zusätzliche Befestigungsprofile für die wärme- oder kälteabstrahlende Abschlußplatte beziehungsweise - schicht. Wärmedämmende und zusätzliche wärmeabstrahlende Beschichtungen auf der Baukonstruktion sind notwendig, um das System zu optimieren.

In einer Weiterbildung der Erfindung ist es vorgesehen, daß der Halteabschnitt das Rohr an seinem Umfang zumindest teilweise kontaktierend umfaßt. Für die Erfindung ist es besonders wichtig, daß das medienleitende Rohr an seinem Umfang sehr gut kontaktiert ist zur Unterkonstruktion, damit diese die Wärme oder Kälte direkt aufnimmt. Die so aufgenommene Wärme oder Kälte wird dann über die Auflage beziehungsweise den Kontaktabschnitt für die Befestigung und Kontaktierung der abstrahlenden Abschlußplatte oder Abschlußschicht geleitet und dort von dieser Abschlußplatte direkt aufgenommen. Dabei ist es sehr wichtig, daß diese Abschlußplatte die Möglichkeit hat satt aufzuliegen und sie wird erfindungsgemäß insbesondere mit entsprechenden Befestigungsmittels kraftschlüssig an dieser Unterkonstruktion befestigt.
Eine Weiterbildung der Erfindung zeichnet sich dadurch aus, daß das Rohr direkt an der Baukonstruktion beziehungsweise bevorzugt in einem geringen Abstand von der Baukonstruktion form- oder kraftschlüssig von dem Halteabschnitt gehalten wird. Zum einen ist es günstig den Abstand zur Baukonstruktion gering zu halten oder aber dort noch wärmedämmende Mittel oder abstrahlfördernde Mittel vorzusehen. Zum anderen ist es allerdings auch sehr wichtig, daß ein möglichst großer Kontaktbereich des Rohres zur Unterkonstruktion vorgesehen ist, um die Wärme oder Kälte über eine große Oberfläche an die Unterkonstruktion und von dort an die wärme- oder kälteabstrahlende Abschlußplatte weiterzuleiten. Die Wärme beziehungsweise Kälte soll allerdings nicht in die Baukonstruktion eingeleitet werden.
Aus diesem Grund ist es bevorzugt, wenn das Rohr mit entsprechenden Abstandshaltern beispielsweise von der Baukonstruktion leicht entfernt befestigt wird und die Zwischenräume zwischen den Befestigungsstellen sozusagen als Luftschicht eine spezielle Wärmedämmung zusätzlich bilden. Weiterhin zusätzlich kann man an den Befestigungsstellen auch noch Dämmmittel vorsehen, die zwischen dem Halteabschnitt für das Rohr und der Baukonstruktion angeordnet werden oder die speziell auf der zur Baukonstruktion weisenden Seite an dem Halteabschnitt der Unterkonstruktion vorgesehen sind.
Demnach ist es erfindungsgemäß auch vorgesehen, daß an beziehungsweise in dem Halteabschnitt zumindest ein Befestigungsmittel für die Befestigung des Profils an der Baukonstruktion anordenbar beziehungsweise angeordnet ist.
Das Profil weist im Querschnitt eine U-, C- beziehungsweise E-Form auf. Dabei ist der geschlossene Schenkel des U als Kontaktabschnitt beziehungsweise als Auflage für die Abschlußplatte vorgesehen. Damit wird gleichzeitig die gewünschte große Kontaktfläche hergestellt, die zu den bereits beschriebenen, vorteilhaften Wirkungen führt.

Erfindungsgemäß ist es auch vorgesehen, daß der Halteabschnitt für das Rohr als Nut ausgebildet ist. Die Nut ist dabei dem Durchmesser des Rohres angepaßt, damit das Rohr satt kontaktierend in dieser Nut anliegt.

Eine Weiterbildung der erfindungsgemäßen Unterkonstruktion sieht vor, daß die Nut klammerförmig ausgebildet ist, derart, daß das Rohr in die Klammer einklemmbar ist und/oder das beziehungsweise die Befestigungsmittel für die Befestigung an der Baukonstruktion in der Nut, bevorzugt am Boden der Nut vorgesehen ist beziehungsweise sind. Damit erzielt man einen sehr positiven Effekt, indem beispielsweise die Nut gleichzeitig das Befestigungsmittel für die Befestigung an der Baukonstruktion aufnimmt, kann dieses entsprechend gedämmt werden, so daß an dem Befestigungsmittel keine Wärme in die Baukonstruktion eindringen kann. Die klammerförmige Ausbildung bietet den Vorteil, daß neben dem Kraftschluß auch ein Formschluß erreicht werden kann, in dem die Klammer zumindest abschnittsweise der Form des Rohres angepaßt ist.

Ein weiterer Aspekt der Erfindung ist auch dadurch angegeben, daß in der Nut eine Perforierung vorgesehen ist, die das Rohr in dieser fixiert.

Eine weitere Variante der erfindungsgemäßen Unterkonstruktion ist dadurch angegeben, daß die Nut und das Rohr in Art einer

Clipsverbindung miteinander verbindbar sind. Dadurch gelingt es ebenfalls einen kraft- und/oder formschlüssigen Verbund von Rohr und Unterkonstruktion zu erhalten. Es ist selbstverständlich möglich, entweder alternativ oder zusätzlich in der Nut Einstanzungen beziehungsweise durch Pressen oder Formen erhaltene Erhöhungen vorzusehen, derart, daß sie das Rohr im eingebauten Zustand halten und/oder klemmen.

Die Erfindung schlägt weiterhin in einer Variante vor, daß die Fixierungs- beziehungsweise Verbindungsmittel in der Nut derart angeordnet und ausgebildet sind, daß sie das Rohr im eingebauten Zustand am Boden beziehungsweise an der geschlossenen Seite der Nut halten.

Es ist weiterhin vorgesehen, daß die Nut bauchig ausgebildet ist, um einen möglichst großen Teil des Umfangs des Rohres zu umfassen. All diese Maßnahmen können alternativ oder gemeinsam vorgesehen sein, um eine möglichst gute Kontaktierung des Rohres mit der Unterkonstruktion zu erreichen. Man erhält demnach sozusagen eine beheizte Unterkonstruktion. Beim Stand der Technik sind alle bisher bekannten Unterkonstruktionen dadurch gekennzeichnet, daß diese kalt, also nicht beheizt sind. Die Wärmeleitung erfolgt erfindungsgemäß jetzt direkt von dem Medium führenden Rohr über die Unterkonstruktion zur abstrahlenden Platte. Es wird eine sehr reaktionsschnelle und effiziente Wärmeleitung ermöglicht, die Heizkosten reduziert und insbesondere mit relativ geringem Kostenaufwand gegenüber den aus dem Stand der Technik bekannten Lösungen herstellbar ist.

Die Erfindung zeichnet sich auch dadurch aus, daß im Boden der Nut beziehungsweise im geschlossenen Schenkel des U zur Baukonstruktion weisende Vertiefungen, Prägungen oder dergleichen vorgesehen sind, die zum einen als Abstandhalter für das Rohr von der Baukonstruktion im eingebauten Zustand dienen und die nach einer Variante auch gleichzeitig die Befestigungsmittel zur Befestigung der Unterkonstruktion an der Baukonstruktion aufnehmen können. Dadurch, daß die Befestigungsmittel dann in diesen vom Rohr aus gesehen Vertiefungen vorgesehen sind, erfolgt keine Kontaktierung des Befestigungsmittels mit dem medienführenden Rohr, wodurch bereits ein Wärmedämmeffekt entsteht. Des Weiteren kann man in dieser Vertiefung nach dem Anbringen der Befestigungsmittel noch eine wärmedämmende Schicht vorsehen, so daß die Wärmeleitung zur Baukonstruktion hin weiter verschlechtert wird. Man will dies erreichen, um die Baukonstruktion nicht unnötigerweise aufzuheizen, sondern die Wärme beziehungsweise die Kälte in den zu beheizenden oder zu kühlenden Raum zu leiten. Dies genau wird mit den erfindungsgemäßen Varianten für eine Unterkonstruktion optimal erreicht, da zum einen gewährleistet ist, daß keine Wärme- oder Kälteverluste bezüglich der Einleitung in die Baukonstruktion entstehen und zum anderen eine optimale Wärmeleitung zum Raum hin und der dort anzuordnenden Abschlußplatte oder Abschlußschicht gewährleistet ist.

Die Erfindung ist in einer bevorzugten Variante dadurch gekennzeichnet, daß das Profil eine Profilhöhe von 20 mm bis 50 mm, bevorzugt 30 mm aufweist, wobei der Abstand des im Profil eingefügten Rohres zur vom Bauwerk wegweisenden Seite des Profils ebenfalls bevorzugt wenigstens 5 mm beträgt. Das heißt, daß die Nut beziehungsweise der Befestigungsabschnitt so bemessen ist, daß nach dem Einfügen des Rohres wenigstens 5 mm Luft zwischen der Auflagefläche beziehungsweise Kontaktfläche und dem Rohr bestehen. Dies ist dadurch begründet, daß versehentlich an der Stelle des Rohres eingedrehte Befestigungsschrauben für die Abschlußplatte nicht in das Rohr eindringen, wenn man eine entsprechende Schraubengröße verwendet. Für unterschiedliche Platten, die es beispielsweise in Stärken von 9,5 mm, 12,5 mm oder 16 mm gibt, verwendet man unterschiedliche Befestigungsschrauben, wobei ein Schraubenüberstand zur Befestigung notwendig ist. Dieser darf allerdings nicht so groß sein, daß die Schrauben mit ihren Spitzen dann das Rohr beschädigen und es zu Undichtigkeiten kommt.

Erfahrungsgemäß ist es im Ausbau, insbesondere im Trockenbau so, daß die Befestigung der abstrahlfördernden Abschlußplatte oder -schicht mit Spacksschrauben erfolgt, die ohne vorzubohren und ohne vorher anzuzeichnen, in die Unterkonstruktion eingebracht werden. Dabei ist es besonders bevorzugt, sogenannte selbstschneidende Schrauben zu verwenden. Diese würden, wenn sie auf das Rohr treffen würden, dieses beschädigen und zu Undichtigkeiten führen. Um dies zu vermeiden, verwendet man entsprechend der jeweiligen Plattenstärke die dafür vorgesehenen Schrauben, zum Beispiel 19 mm, 22 mm und so weiter und ist damit sicher, daß, wenn der Abstand des Rohres zur Ebene der Auflagefläche für die Abschlußplatte wenigstens 5 mm beträgt, diese Schrauben nicht in das Rohr eindringen können. Selbst wenn man aus Versehen in der Position des Rohres eine Schraube eindreht, wird diese nicht in das Rohr eindringen können. Damit werden unnötige Nacharbeiten oder aber auch spätere Undichtigkeiten aufgrund von Beschädigungen des Rohres vermieden.

Das Profil weist, wie bereits mehrfach erwähnt, einen Kontaktabschnitt beziehungsweise eine Auflage für die Befestigung der Abschlußplatte oder Abschlußschicht auf. Diese ist nach einer Weiterbildung der Erfindung als eine großflächige und/oder direkte Kontaktierung mit der Abschlußplatte oder Abschlußschicht ausgebildet. Besonders bevorzugt kann man selbstverständlich auch noch wärmeleitungsfördernde Pasten oder wärmeleitungsfördernde Mittel vorsehen, die einen engen Kontakt zum Kontaktabschnitt herstellen. Dies kann man auch durch Kleben beispielsweise erreichen.

Die Erfindung sieht weiterhin vor, daß der oder die Kontaktabschnitte für die Befestigung der Abschlußplatte oder Abschlußschicht direkt neben dem Halteabschnitt vorgesehen ist/sind. Selbstverständlich ist es nach der Erfindung auch vorgesehen, daß am Profil Abstrahlflächen, insbesondere an von den Halteabschnitten benachbart angeordneten Profilabschnitten gebildet sind, auf die dann die Abschlußplatte aufgebracht werden kann. Selbstverständlich ist es demnach auch vorgesehen, daß die Abstrahlfläche gleichzeitig die Kontaktfläche bildet, auf der die Abschlußplatte vollflächig beziehungsweise satt aufliegend und insbesondere kraftschlüssig anordenbar ist.

Die Erfindung schlägt in einer Ausführungsform vor, daß das Profil aus gut wärmeleitendem Material gebildet ist. Dabei können beispielsweise Materialien wie Stahl oder Aluminium, aber auch geeignete Kunststoff- oder Kunststoffverbundmaterialien verwendet werden, die eine relativ gute Wärmeleitfähigkeit aufweisen. Eine gute Wärmeleitfähigkeit kann auch durch Kunststoffverbundmaterialien erreicht werden, die zumindest teilweise gut leitendes Material enthalten, das dann selbstverständlich an der zum Rohr hinweisenden Seite vorgesehen ist, um einen optimalen Wärmeübergang zu gewährleisten.

Das Profil kann entweder als Profilstreifen oder aber bevorzugt als Platte ausgebildet sein. Dabei sind stangenförmige Profile ebenso nach der Erfindung vorgesehen wie quadratische oder rechteckige Platten. Das Profil ist bevorzugt metallisch und insbesondere magnetisch oder magnetisierbar. Damit kann man die Abschlußplatten auch mittels Magneten beziehungsweise magnetischer Kräfte an der Unterkonstruktion befestigen oder zumindest für die Montage fixieren. Die Erfindung schlägt in einer Variante auch vor, daß das Profil eine haftende Oberfläche, zum Beispiel ein Klettband oder eine Klebefläche aufweist. Auch damit wird die Montage der Abschlußplatte letztendlich verbessert.

Die erfindungsgemäße Unterkonstruktion zeichnet sich in einer Variante der Erfindung auch dadurch aus, daß das Profil bevorzugt nach innen weisende Abkantungen aufweist, die als Auflage- und/oder Verbindungsmittel auf beziehungsweise mit der Baukonstruktion dienen. Diese Auflagen können als einfache Akantungen vorgesehen sein, die dann lediglich als Auflager auf der Baukonstruktion oder an der Baukonstruktion dienen. Sie können jedoch auch derart abgekantet sein, daß man diese an den an der Baukonstruktion bereits vorhandenen Befestigungsmitteln beispielsweise einhängen kann. Die Abkantung kann aber auch derart gestaltet sein, daß diese Abkantungen gleichzeitig zur Verbindung von nebeneinander anzuordnenden Teilen einer Unterkonstruktion oder aber in Längsrichtung hintereinander anzuordnenden Teilen der Unterkonstruktion dienen.

In einer Variante der Erfindung ist es vorgesehen, daß auf der Kontaktfläche und/oder in der Nut die Wärmeleitung verbessernde Mittel vorgesehen, angeordnet oder anordenbar sind. Derartige, die Wärmeleitung verbessernde Mittel sind beispielsweise als Wärmeleitpasten bekannt. Selbstverständlich ist es auch möglich Graphit als Wärmeleitung verbesserndes Mittel einzusetzen. Weiterhin sind bestimmte synthetische Pasten bekannt, die ebenfalls die Wärmeleitung verbessern. Die Wärmeleitung verbessernden Mittel können dabei entweder klebende oder gleitende Eigenschaften besitzen, derart, daß ein sehr guter Kontakt der Unterkonstruktion mit dem Medium führenden Rohr und gleichzeitig ein sehr guter Kontakt zwischen Kontaktfläche und der Abschlußplatte gebildet wird.

Das erfindungsgemäße Profil kann in standardisierten Längen und Breiten fertigbar sein. Dabei sind also Standardlängen von 2,25 m bis 6 m und größer möglich. Als bevorzugte Breite ist eine Ausführungsvariante von 10 cm vorgesehen. Die Materialstärke für das Profil der Unterkonstruktion bewegt sich bevorzugt zwischen 0,5 mm bis etwa 5 mm, um sowohl die notwendige Wärmeleitfähigkeit zum einen und zum anderen eine ausreichende Stabilität zu gewährleisten.

In einer weiteren Variante der Erfindung ist es vorgesehen, daß Verbindungsmittel zur Verbindung von aneinanderzufügenden Profilen vorgesehen sind, mit denen bestimmte Teile einer Unterkonstruktion miteinander verbindbar sind. Dies richtet sich jeweils nach der Größe der verwendeten Unterkonstruktion und der Größe des Raumes. Man wird so viele Unterkonstruktionselemente in dem Raum befestigen, wie notwendig sind, um die Decke ausreichend mit entsprechender Länge eines medienführenden Rohres zu versehen und dann erst das Rohr einbringen. Um eine einfache Verbindung zwischen den Teilen der Unterkonstruktion dann zu erreichen, sind Verbindungsmittel vorgesehen, die beispielsweise als Abwinkelung, als Öffnung, als Haken oder dergleichen mit entsprechenden korrespondierenden Mitteln vorgesehen sind und die zu einer einfachen Montage der Unterkonstruktion dienen. Die Verbindungsmittel greifen dabei bevorzugt ineinander, sind als Abwinkelung vorgesehen und können dabei gleichzeitig auch der Abstützung an der Baukonstruktion dienen.

Eine Weiterbildung schlägt vor, daß zwischen Abschlußplatte und Rohr eine Schutzplatte zum Schutz vor Anbohren vorgesehen ist. Dies gilt für den Fall, daß man beispielsweise keine Schrauben der entsprechenden Länge zur Verfügung hat, um zu vermeiden, daß dann ein Rohr versehentlich angebohrt wird. Des Weiteren ist es auch bei der Verwendung von entsprechend der Länge ausgebildeten Schrauben möglich, daß diese durch die Platte durchdringen und dann ebenfalls das Rohr verletzen könnten.

In einer Weiterbildung der Erfindung ist es vorgesehen, daß das Profil mit wärmedämmenden Ergänzungsmaterialien zumindest teilweise versehen ist. Dabei kann das wärmedämmende Ergänzungsmaterial direkt am Profil angeordnet sein. Es kann jedoch auch vorgesehen sein, daß man dieses Ergänzungsmaterial nach der Montage der Unterkonstruktion dann anbringt. Hierbei ist beispielsweise an ein Ausschäumen der Zwischenräume gedacht. Es ist jedoch auch vorgesehen, daß die Ergänzungsmaterialien beispielsweise als Metallplatte mit Styroporkern, Holzrücken beziehungsweise Hartschaumprofil, Hartschaumplatte oder dergleichen ausgebildet sind.

Die Erfindung stellt auch eine Decken- oder Wandheizung beziehungsweise -kühlung, insbesondere nach dem Wärmestrahlungssystem zur Verfügung mit einer Unterkonstruktion nach einer oder mehreren der vorhergehenden Varianten beziehungsweise Ausführungsfomen der Erfindung.

Eine Weiterbildung der so beschriebenen Decken- und Wandheizung zeichnet sich dadurch aus, daß als Abschlußplatte oder -schicht eine abstrahlfördernde Platte vorgesehen ist. Hierzu eignen sich insbesondere Gipskartonplatten, Rigipsplatten, Gipsfaserbeziehungsweise Gipskartonfaserplatten.

Die Erfindung schlägt in einer Variante der Decken- oder Wandheizung weiterhin vor, daß zwischen dem Profil und der Baukonstruktion eine Dämmschicht und/oder die Wärmestrahlen reflektierende Schicht vorgesehen ist. Auch diese Maßnahme dient der Verbesserung der Abstrahlung zum zu wärmenden oder zu kühlenden Raum hin und verhindert gleichzeitig ein nicht gewünschtes und nicht notwendige Eindringen der Wärme oder Kälte in die Baukonstruktion.

Die Erfindung wird nachfolgend anhand von Ausführungsbeispielen weiter beschrieben. Es zeigen:
- Fig. 1: eine dreidimensionale Darstellung der erfindungsgemäßen Unterkonstruktion an einem Teil der Baukonstruktion;
- Fig. 2: Unterkonstruktion nach der Erfindung mit Abschlußplatte in einer dreidimensionalen Darstellung;
- Fig. 3: Unterkonstruktion nach der Erfindung im Schnitt und
- Fig. 4: Unterkonstruktion nach der Fig. 3 als Draufsicht.

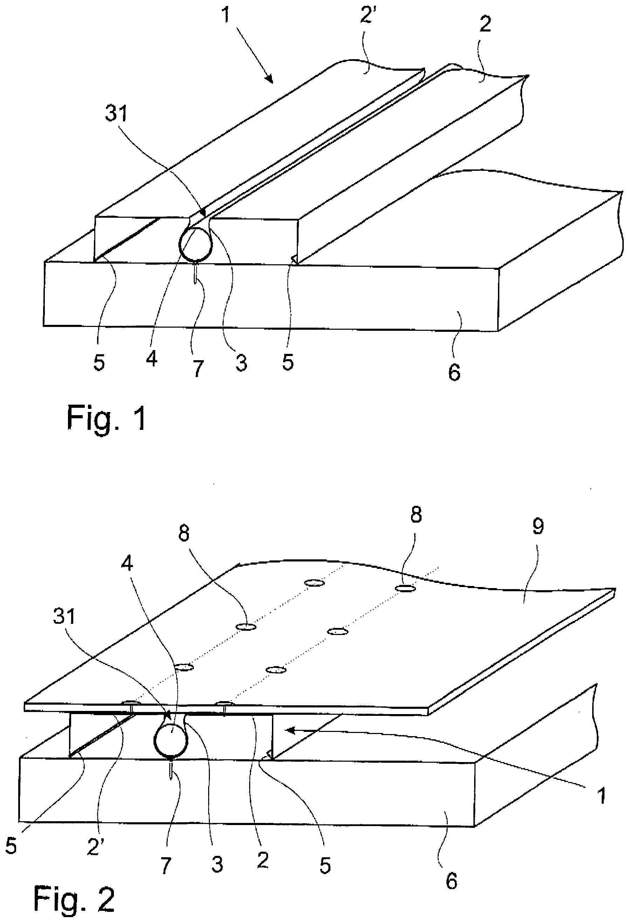

Die Fig. 1 zeigt eine dreidimensionale Darstellung der erfindungsgemäßen Unterkonstruktion an einem Teil der Baukonstruktion. Das Profil 1 ist dabei mit einem Befestigungsmittel 7 an der Baukonstruktion 6 befestigt. Dieses Befestigungsmittel 7 befindet sich in dem Halteabschnitt 3, der U-förmig zum Beispiel als Nut ausgebildet ist und der insbesondere eine von der Baukonstruktion 6 wegweisende Öffnung 31 besitzt. Aufgrund dieser Anordnung ist es möglich, daß zunächst das Profil 1 an der Baukonstruktion 6 mittels der Befestigungsmittel 7 befestigt wird und anschließend das Rohr 4, wie ersichtlich, in den Halteabschnitt 3 eingedrückt wird. Der Halteabschnitt 3 ist der Form des Rohres 4 angepaßt, so daß dieses an einem großen Teil des Umfanges von dem Halteabschnitt 3 umfaßt wird. Die Öffnung 31 ist etwas enger ausgeführt, als der weiteste Durchmesser des Halteabschnitts 3, so daß das Rohr 4 im eingebauten Zustand, im Falle einer Deckenkonstruktion würde dann die Öffnung 31 nach unten zeigen, das Rohr 4 nicht aus dem Halteabschnitt 3 herausrutschen kann. Neben der Öffnung 31 erstrecken sich links und rechts Kontaktabschnitte 2 beziehungsweise 2'. Diese Kontaktabschnitte 2 beziehungsweise 2' dienen der Auflage für die Abschlußplatte 9, die in Fig. 1 noch nicht befestigt ist.

Das Profil 1 ist seitlich abgewinkelt, und zwar in der Höhe, die der Höhe des Rohres 4 plus einem gewünschten Sicherheitsabstand entspricht, um die Abschlußplatte 9 nach ihrer Befestigung in diesem Abstand von der Baukonstruktion befestigen zu können. Ein Sicherheitsabstand ist deshalb zwischen Rohr 4 und der die beiden Kontaktabschnitte 2, 2' gedachten Linie vorgesehen, um zu verhindern, daß versehentlich an dieser Stelle eindringende Schrauben das Rohr 4 verletzen. Zur Verbesserung der Stabilität, als Anlageflächen und/oder zum Einhängen in an der Baukonstruktion befestigten Verbindungsmitteln (nicht dargestellt) ist eine Abkantung 5 beidseitig an dem Profil 1 vorgesehen.

Die erfindungsgemäße Lösung erlaubt nun sowohl im Neubau als auch sowohl in der Bauwerkssannierung, das Profil 1 derart einzusetzen, daß mehrere solcher Profilabschnitte nebeneinander und, wenn notwendig, auch hintereinander angeordnet werden, um das Rohr 4 als Endlosrohr in dieses dann schlangenförmig einzufügen, ohne daß das Rohr irgendwelche Verbindungsmittel im gesamten Bereich zumindest eines Raumes, einer Decke oder einer Wand aufweist. Dadurch werden Undichtigkeiten vermieden. Das Rohr 4 wird dann letztlich nur mit seinem Anfang und mit seinem Ende mit den Zu- beziehungsweise Ableitungen für die medienführenden Rohre des Bauwerkes (ebenfalls nicht dargestellt) angeschlossen.

Man erhält damit ein sehr strömungsgünstiges Rohrsystem, das ohne jegliche Verbindungen (Fittings, Schweiß- oder Lötnähte oder dergleichen) auskommt und das gleichzeitig noch zu einer Verbessung der Wirksamkeit der Decken- beziehungsweise Wandheizung führt. Durch die Einbettung des Rohres 4, wie in Fig. 1 und 2 gezeigt, entsteht eine sehr enge und damit gut wärmeleitende Verbindung zwischen dem medienführenden Rohr 4 und dem Profil 1. Die Wärme beziehungsweise Kälte des Mediums wird daher direkt auf die Unterkonstruktion, nämlich das Profil 1, übertragen. Um nun die erwünschte Abstrahlung in den Raum zu erreichen, sind die Kontaktabschnitte 2, 2' sozusagen als Abstrahlflächen ausgebildet und bilden eine sehr großflächige und vollflächige Auflage für eine Abschlußplatte 9.

Die Befestigung der Abschlußplatte 9 auf dem Profil 1 ist in Fig. 2 gezeigt. Dort ist diese mit Schrauben 8 auf dem Kontaktabschnitt 2 kraftschlüssig verbunden. Zur Verbesserung der Verbindung kann selbstverständlich noch eine Klebung, ein wärmeleitungsförderndes Material zwischen der Abschlußplatte und dem Profil vorgesehen sein, so daß die Wärmeleitung insgesamt noch verbessert wird. Insgesamt ist ersichtlich, daß eine satte und vollflächige Auflage durch die erfindungsgemäße Lösung der Unterkonstruktion gefunden wurde, die ein optimales Heizungssystem für eine Wärmung aber auch für eine Kühlung ermöglicht. Die Wärme gelangt direkt über das Profil in die Abschlußplatte 9 und wird nicht durch irgendwelche Unterbrechungen gestört. Messungen haben ergeben, daß gerade eine nicht vollflächige Auflage für die Wärmestrahlung beziehungsweise den Wärmeübergang sehr wichtig ist. So ist mit der erfindungsgemäßen Lösung eine Kombination gefunden worden, die sowohl eine sehr günstige Kontaktfläche für das Rohr zum Profil 1 hin aufweist und gleichzeitig einen ausreichend großen Kontaktabschnitt zur Verbindung mit einer Abschlußplatte aufweist, der einen sehr hohen Wirkungsgrad für das Wärme- beziehungsweise Kühlsystem zur Verfügung stellt.

In die Baukonstruktion 6 gelangt aufgrund dieser Konstellation nur wenig Wärme beziehungsweise Kühlung. Die Leistungsverluste sind damit erheblich reduziert. Beim Stand der Technik ist es so, daß zumindest zwischen der Unterkonstruktion, die auf dem Bauwerk befestigt ist, und der Abschlußplatte dann noch eine Zwischenschicht, aufgrund dazwischenliegender Befestigungsprofile, Leisten oder dergleichen vorhanden ist und damit ein Luftzwischenraum entsteht, der zu einer Verschlechterung der Wärmeleitung führt. Des Weiteren ist dann bei einem solchen System zwingend eine Wärmedämmung und/oder eine Abstrahlbeschichtung auf der Baukonstruktion 6 notwendig. In den Figuren 1 und 2 nicht gezeigt ist die Möglichkeit der parallelen Anordnung eines weiteren beziehungsweise mehrerer weiterer Profile 1 neben dem dargestellten Profil 1. Dies wurde jedoch bereits so beschrieben, daß es für die Darstellung beziehungsweise für die Funktionsweise der Erfindung nicht notwendig ist, ein weiteres Profil 1 dort darzustellen. Dieses Profil 1 kann entweder direkt angelegt und mit entsprechenden Verbindungsmitteln mit dem ersten Profil 1 verbunden werden. Es kann aber auch beabstandet davon vorgesehen sein. Hier ist die Erfindung nicht eingeschränkt. Dies ist sogar recht günstig, weil man damit auch unterschiedlichste Raumgrößen beziehungsweise Deckengrößen oder Wandgrößen bedienen kann.

Die Fig. 2 zeigt eine Unterkonstruktion nach der Erfindung, bei der die Abschlußplatte 9 bereits an den Kontaktabschnitten 2, 2' befestigt ist. Dies kann man beispielsweise mit selbstschneidenden Schrauben, Spacks oder dergleichen vornehmen. Alle anderen Bezugszeichen wurden bereits bei der Vorstellung der Fig. 1 beschrieben und werden hier analog verwendet. Auf eine Wiederholung wird aus diesem Grund verzichtet.

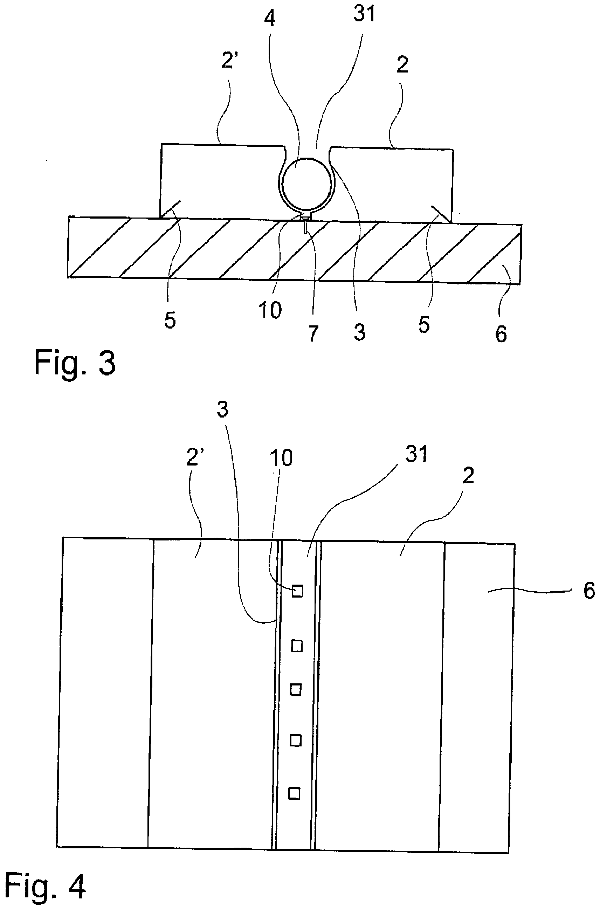

Die Fig. 3 zeigt eine Unterkonstruktion nach der Erfindung im Schnitt. In dieser Variante der Erfindung ist in dem Halteabschnitt 3 in bestimmten Abständen (siehe Fig. 4) eine Vertiefung 10 vorgesehen. Diese Vertiefung 10 dient der Aufnahme des Befestigungsmittels 7, derart, daß das Befestigungsmittel 7 nicht mit dem Rohr 4 in Kontakt kommt. Durch die Vertiefung 10 entsteht gewissermaßen ein Abstandhalter, der das Rohr 4 in einem bestimmten Abstand von der Baukonstruktion 6 hält. Dadurch wird der Wärmeübergang zu der Baukonstruktion 6 weiter verschlechtert, was in diesem Fall gewünscht ist. Die gesamte Wärme wird auf das Profil 1 beziehungsweise auf dessen Abstrahlflächen 2, 2' übertragen.

Sehr schön zu sehen sind hier die Abkantungen 5, die, wie bereits erwähnt, der Stabilisierung des Profils, für die günstige Auflage und zum anderen auch der Möglichkeit der Befestigung auf der Baukonstruktion 6 dienen. Zwischen dem Befestigungsmittel 7 und dem Rohr 4 kann in einer Weiterbildung und nicht dargestellten Ausführungsform der Erfindung ein Dämmmittel vorgesehen sein. Im Weiteren kann auch der Abstand zwischen den Kontaktabschnitten 2, 2' und der Baukonstruktion durch ein Dämmmittel ausgefüllt oder ausgeschäumt sein. Es ist weiterhin möglich, auf der Baukonstruktion 6 zur weiteren Erhöhung der Wirksamkeit der Heizung beziehungsweise Kühlung eine abstrahlfördernde Schicht aufzubringen. Auch ist es nach der Erfindung möglich, dort noch eine Dämmschicht aufzubringen. Dies erhöht den Wirkungsgrad der Heizung beziehungsweise Kühlung noch weiter.

Die Fig. 4 zeigt die Darstellung nach Fig. 3 in einer Draufsicht. Die entsprechenden Bezugszeichen wurden bereits erläutert und werden in gleicher Weise wieder verwendet.

## Patentansprüche

1. Unterkonstruktion für eine Heizung beziehungsweise Kühlung bestehend aus einem Profil (1), einem Rohr (4) für ein Heizbeziehungsweise Kühlmedium und einer wärme- oder kälteabstrahlenden Abschlussplatte (9) oder Abschlussschicht, wobei das Profil das Rohr fixierend aufzunehmen vermag und an einer Baukonstruktion (6), wie z.B. an einer vorhandenen Decken- oder Wandkonstruktion eines Bauwerkes befestigbar ist, wobei das Profil (1) wenigstens ein Befestigungsmittel (7) zur Befestigung an der Baukonstruktion (6), sowie wenigstens einen Kontaktabschnitt (2) für die Abschlußplatte (9) oder -schicht aufweist, wobei der Kontaktabschnitt (2) als Auflage für die Befestigung und Kontaktierung der abstrahlenden Abschlussplatte (9) oder Abschlussschicht vorgesehen ist und das Profil (1) einen der Form des Rohres (4) entsprechenden Halteabschnitt (3) für das medienführende Rohr (4) aufweist, der eine von der Baukonstruktion (6) im eingebauten Zustand wegweisende Aufnahmeöffnung (31) für das Rohr besitzt und der Halteabschnitt (3) für das Rohr (4) als Nut ausgebildet ist, welche dem Durchmesser des Rohres (4) angepasst ist, damit das Rohr (4) satt kontaktierend in dieser Nut anliegt, wobei Fixierungs- beziehungsweise Verbindungsmittel in der Nut derart angeordnet und ausgebildet sind, dass sie das Rohr in eingebautem Zustand am Boden der Nut halten, **dadurch gekennzeichnet, dass** an beziehungsweise in dem Halteabschnitt (3) zumindest das Befestigungsmittel (7) für die Befestigung des Profils (1) an der Baukonstruktion (6) angeordnet ist.

2. Unterkonstruktion nach Anspruch 1, **dadurch gekennzeichnet, dass** das Profil (1) zumindest abschnittsweise ein Endlosrohr (4) aufzunehmen vermag.

3. Unterkonstruktion nach einem oder beiden der vorhergehenden Ansprüche, **dadurch gekennzeichnet, dass** der Halteabschnitt (3) das Rohr (4) an seinem Umfang zumindest teilweise kontaktierend umfasst und/oder das Rohr (4) von dem Halteabschnitt (3) direkt an der Baukonstruktion (6) beziehungsweise in einem geringen Abstand von der Baukonstruktion (6) form- und/oder kraftschlüssig hält.

4. Unterkonstruktion nach einem oder mehreren der vorhergehenden Ansprüche, **dadurch gekennzeichnet, dass** das Profil (1) im Querschnitt U-, C- beziehungsweise E-artig ausgebildet ist und/oder als Profil (1) ein Strangpressprofil vorgesehen ist.

5. Unterkonstruktion nach einem oder mehreren der vorhergehenden Ansprüche, **dadurch gekennzeichnet, dass** die Nut klammerförmig ausgebildet ist, derart, dass das Rohr (4) in die Klammer einklemmbar ist und/oder das beziehungsweise die Befestigungsmittel (7) für die Befestigung an der Baukonstruktion (6) in der Nut, bevorzugt am Boden der Nut vorgesehen ist/sind und/oder in der Nut eine Perforierung vorgesehen ist, die das Rohr (3) in dieser fixiert.

6. Unterkonstruktion nach einem oder mehreren der vorhergehenden Ansprüche, **dadurch gekennzeichnet, dass** die Nut und das Rohr (4) in Art einer Clipsverbindung miteinander verbindbar sind und/oder in der Nut Einstanzungen beziehungsweise durch Pressen oder Formen erhaltene Erhöhungen vorgesehen sind, derart, dass sie das Rohr (4) im eingebauten Zustand halten und/oder klemmen und/oder die Nut bogenförmig ausgebildet ist, um einen möglichst großen Teil des Umfangs des Rohres (4) zu umfassen.

7. Unterkonstruktion nach einem oder mehreren der vorhergehenden Ansprüche, **dadurch gekennzeichnet, dass** im Boden der Nut beziehungsweise im geschlossenen Schenkel des U zur Baukonstruktion (6) weisende Vertiefungen (10), Prägungen oder dergleichen vorgesehen sind, die als Abstandhalter für das Rohr (4) von der Baukonstruktion (6) im eingebauten Zustand dienen und/oder in den Vertiefungen (10) die Befestigungsmittel (7) zur Befestigung an der Baukonstruktion (6) anordenbar beziehungsweise vorgesehen sind und/oder in den Vertiefungen (10) oder unter diesen in Richtung zur Baukonstruktion (6) Dämmmaterial vorgesehen ist.

8. Unterkonstruktion nach einem oder mehreren der vorhergehenden Ansprüche, **dadurch gekennzeichnet, dass** das Profil eine Profilhöhe von 20 bis 50 mm, bevorzugt 30 mm aufweist, wobei der Abstand des im Profil eingefügten Rohres (4) zur von der Baukonstruktion (6) wegweisenden Seite des Profils ebenfalls bevorzugt wenigstens 5 mm beträgt und/oder der Kontaktabschnitt (2, 2') zur Befestigung für eine großflächige und/oder direkte Kontaktierung mit der Abschlussplatte (9) oder -schicht ausgebildet ist.

9. Unterkonstruktion nach einem oder mehreren der vorhergehenden Ansprüche, **dadurch gekennzeichnet, dass** der oder die Kontaktabschnitte (2, 2') für die Befestigung der Abschlussplatte (9) oder -schicht direkt neben dem Halteabschnitt (3) vorgesehen ist/sind und/oder am Profil (1) Abstrahlflächen, insbesondere an von den Halteabschnitten (3) benachbart angeordneten Profilabschnitten gebildet sind und/oder die Abstrahlfläche gleichzeitig die Kontaktfläche (2, 2') bildet, auf der die Abschlußplatte (9) vollflächig, beziehungsweise satt und insbesondere kraftschlüssig anordenbar ist.

10. Unterkonstruktion nach einem oder mehreren der vorhergehenden Ansprüche, **dadurch gekennzeichnet, dass** das Profil (1) aus gut wärmeleitendem Material gebildet ist und/ oder das Profil (1) aus Metall, Kunststoff, Verbundmaterial oder dergleichen gebildet ist und/oder das Profil (1) als Profilstreifen oder als Platte ausgebildet ist und/oder das Profil stangenförmig, als quadratische oder rechteckige Platte ausgebildet ist und/oder das Profil metallisch, magnetisch beziehungsweise magnetisierbar ausgebildet ist und/oder das Profil eine haftende Oberfläche, zum Beispiel Klettband oder Klebefläche aufweist und/oder das Profil (1) bevorzugt nach innen weisende Abkantungen (5) aufweist, die als Auflage und/oder Verbindungsmittel auf beziehungsweise mit der Baukonstruktion (6) dienen und/oder auf der Kontaktfläche (2, 2') und/oder in der Nut die Wärmeleitung verbessernde Mittel vorgesehen, angeordnet oder anordenbar sind.

11. Unterkonstruktion nach einem oder mehreren der vorhergehenden Ansprüche, **dadurch gekennzeichnet, dass** das Profil (1) in standardisierten Längen und Breiten fertigbar ist und/oder Verbindungsmittel zur Verbindung von aneinander zu fügenden Profilen (1) vorgesehen sind und/oder als Verbindungsmittel Abwinklungen vorgesehen sind, die ineinander zu greifen vermögen, die bevorzugt gleichzeitig der Abstützung an der Baukonstruktion dienen und/oder zwischen Abschlussplatte und Rohr eine Schutzplatte zum Schutz vor Anbohren vorgesehen ist und/oder das Profil (1) mit wärmedämmenden Ergänzungsmaterialien zumindest teilweise versehen ist und/oder die Ergänzungsmaterialien als Metallplatte mit Styroporkern, Holzrücken beziehungsweise Hartschaumprofil, Hartschaumplatte oder dergleichen ausgebildet sind.

12. Decken- oder Wandheizung beziehungsweise -kühlung, insbesondere nach dem Wärmestrahlungssystem mit einer Unterkonstruktion nach einem oder mehreren der vorhergehenden Ansprüche.

13. Decken- oder Wandheizung beziehungsweise -kühlung nach Anspruch 12, **dadurch gekennzeichnet, dass** als Abschlussplatte (9) oder -schicht eine abstrahlfördernde Platte vorgesehen ist, bevorzugt eine Gipskartonplatte, Rigipsplatte, Gipsfaser- beziehungsweise Gipskartonfaserplatte vorgesehen ist und/oder zwischen dem Profil (1) und der Baukonstruktion (6) eine Dämmschicht und/oder die Wärmestrahlen reflektierende Schicht vorgesehen ist.

## Claims

1. Supporting construction for a heating device or cooling device consisting of a profile (1), a pipe (4) for a heating medium or cooling medium and a heat-radiating or cool-radiating cover plate (9) or cover layer, wherein the profile is able to accommodate the pipe fixingly and can be fastened on a building construction (6) such as e.g. on a present ceiling construction or wall construction of a structure, wherein the profile (1) has at least one fastening means (7) for fastening on the building construction (6), as well as at least one contact portion (2) for the cover plate (9) or cover layer, wherein the contact portion (2) is provided as a support for the fastening and contacting of the radiating cover plate (9) or cover layer and the profile (1) has a holding portion (3), corresponding to the shape of the pipe (4), for the medium-guiding pipe (4), which holding portion has a receiving opening (31), pointing away from the building construction (6) in the installed condition, for the pipe and the holding portion (3) for the pipe (4) is formed as a groove which is adapted to the diameter of the pipe (4), so that the pipe (4) abuts in full contact in this groove, wherein fixing means or connecting means are disposed and formed in the groove such that they hold the pipe in installed condition on the base of the groove, **characterised in that** on or in holding portion (3) is disposed at least the fastening means (7) for the fastening of the profile (1) to the building construction (6).

2. Supporting construction according to claim 1, **characterised in that** the profile (1) can at least in sections accommodate an endless pipe (4).

3. Supporting construction according one or both of the preceding claims, **characterised in that** the holding portion (3) encloses the pipe (4) at its periphery at least partially in contacting manner and/or the pipe (4) by the holding portion (3) holds in form-fitting and/or force-fitting manner directly on the building construction (6) or at a slight distance from the building construction (6).

4. Supporting construction according one or more of the preceding claims, **characterised in that** the profile (1) is formed in cross-section U-shaped, C-shaped or E-shaped and/or an extruded profile is provided as a profile (1).

5. Supporting construction according one or more of the preceding claims, **characterised in that** the groove is formed in the shape of a clamp, such that the pipe (4) can be clamped in the clamp and/or the fastening means (7) for the fastening to the building construction (6) is/are provided preferably on the base of the groove and/or in the groove is provided a perforation which fixes the pipe (3) therein.

6. Supporting construction according one or more of the preceding claims, **characterised in that** the groove and the pipe (4) can be connected with one another in the manner of a clip connection and/or in the groove are provided die-cuts or elevations obtained by pressing or forming, such that they hold and/or clamp the pipe (4) in installed condition and/or the groove formed in an arcuate manner in order to enclose a greatest possible part of the periphery of the pipe (4).

7. Supporting construction according one or more of the preceding claims, **characterised in that** in the base of the groove or in the closed leg of the U are provided recesses (10), impressions or similar pointing towards the building construction (6), which serve as spacers for the pipe (4) from the building construction (6) in installed condition and/or in the recesses (10) can be disposed or are provided the fastening means (7) for fastening on the building construction (6) and/or in the recesses (10) or thereunder in the direction of the building construction (6) is provided insulation material.

8. Supporting construction according one or more of the preceding claims, **characterised in that** the profile has a profile height of 20 to 50 mm, preferably 30 mm, wherein the distance of the pipe (4) inserted in the profile to the side pointing away from the building construction (6) is also preferably at least 5 mm and/or the contact portion (2, 2') for the fastening is formed for a large-area contacting and/or direct contacting with the cover plate (9) or cover layer.

9. Supporting construction according one or more of the preceding claims, **characterised in that** the contact portion(s) (2, 2') for the fastening of the cover plate (9) or cover layer is/are provided directly next to the holding portion (3) and/or radiation surfaces are formed on the profile (1), in particular on portions disposed next to the holding portions (3) and/or the radiation surface forms are simultaneously the contact surface (2, 2') on which the cover plate (9) can be disposed with its full surface, or completely and in particular force-fittingly.

10. Supporting construction according one or more of the preceding claims, **characterised in that** the profile (1) is formed out of material which is a good conductor of heat and/or the profile (1) is formed of metal, plastic, composite material or similar and/or the profile (1) is formed as a profile strip or as a plate and/or the profile is formed rod-shaped, as a quadratic or rectangular plate and/or the profile is formed metallically, magnetically or magnetisably and/or the profile has an adhesive surface, for example hook-and-loop fastener or adhesive surface and/or the profile (1) has bends (5) pointing preferably inwards which serve as support and/or connecting means on or with the building construction (6) and/or on the contact surface (2, 2') and/or in the groove means are provided, disposed or can be disposed which improve the thermal conductivity.

11. Supporting construction according one or more of the preceding claims, **characterised in that** the profile (1) can be manufactured in standardised lengths and breadths and/or connecting means are provided for connection with profiles (1) to be joined to one another and/or as connecting means are provided angled portions which can engage in one another, which preferably serves simultaneously for the support on the building construction and/or between cover plate and pipe is provided a protective plate for protection against spot drilling and/or the profile (1) is provided at least in parts with thermally-insulating supplementary materials and/or the supplementary materials are in the form of a metal plate with styropore core, wooden back or rigid foam profile, rigid foam plate or similar.

12. Ceiling or wall heating device or cooling device, in particular according to the thermal radiation system having a supporting construction according to one or more of the preceding claims.

13. Ceiling or wall heating device or cooling device according to claim 12, **characterised in that** as cover plate or cover layer is provided a radiation promoting plate, preferably a gypsum plaster board, sheetrock plate, gypsum fibreboard or gypsum plaster fibreboard and/or between the profile (1) and the building construction (6) is provided an insulating layer and/or layer reflecting the thermal radiation.

## Revendications

1. Construction porteuse pour un chauffage ou un refroidissement se composant d'un profil (1), d'un tube (4) pour un fluide de chauffage ou de refroidissement et d'une plaque terminale (9) ou couche terminale rayonnant de la chaleur ou du froid, dans laquelle le profil peut recevoir le tube par fixation et peut être fixé à une construction de bâtiment (6) telle qu'une construction de plafond ou de mur présente d'un édifice, dans laquelle le profil (1) présente au moins un moyen de fixation (7) pour la fixation à la construction de bâtiment (6), ainsi qu'au moins une section de contact (2) pour la plaque ou couche terminale (9), dans laquelle la section de contact (2) est prévue comme appui pour la fixation et la mise en contact de la plaque terminale rayonnante (9) ou couche terminale et le profil (1) présente une section de retenue (3) correspondant à la forme du tube (4) pour le tube acheminant le fluide qui possède une ouverture de réception (31) tournée loin de la construction de bâtiment (6) à l'état intégré pour le tube et la section de retenue (3) pour le tube (4) est réalisée comme rainure qui est adaptée au diamètre du tube (4) afin que le tube (4) repose à fleur dans cette rainure, dans laquelle des moyens de fixation ou de liaison sont agencés et réalisés dans la rainure de telle manière qu'ils maintiennent le tube dans l'état intégré au niveau du fond de la rainure, **caractérisée en ce qu'**au moins le moyen de fixation (7) est agencé au niveau ou dans la section de retenue (3) pour la fixation du profil (1) au niveau de la construction de bâtiment (6).

2. Construction porteuse selon la revendication 1, **caractérisée en ce que** le profil (1) peut recevoir au moins par section un tube sans fin (4).

3. Construction porteuse selon l'une ou les deux des revendications précédentes, **caractérisée en ce que** la section de retenue (3) comporte au moins partiellement à fleur le tube (4) au niveau de sa périphérie et/ou maintient le tube (4) de la section de retenue (3) à complémentarité de formes et/ou à force directement au niveau de la construction de bâtiment (6) ou à une distance faible de la construction de bâtiment (6).

4. Construction porteuse selon l'une ou plusieurs des revendications précédentes, **caractérisée en ce que** le profil (1) est réalisé en section transversale en U, C ou E et/ou un profilé extrudé est prévu comme profil (1).

5. Construction porteuse selon l'une ou plusieurs des revendications précédentes, **caractérisée en ce que** la rainure est réalisée en forme de pince de telle manière que le tube (4) puisse être serré dans la pince et/ou le ou les moyens de fixation (7) est/sont prévu(s) pour la fixation au niveau de la construction de bâtiment (6) dans la rainure, de préférence au niveau du fond de la rainure et/ou une perforation est prévue dans la rainure, laquelle fixe le tube (3) dans celle-ci.

6. Construction porteuse selon l'une ou plusieurs des revendications précédentes, **caractérisée en ce que** la nervure et le tube (4) peuvent être reliés entre eux comme une liaison à clip et/ou des découpes ou des élévations obtenues par pressage ou formation sont prévues dans la rainure de telle manière qu'elles maintiennent et/ou serrent le tube (4) dans l'état intégré et/ou la rainure est réalisée en forme d'arc afin de comprendre une partie la plus grande possible de la périphérie du tube (4).

7. Construction porteuse selon l'une ou plusieurs des revendications précédentes, **caractérisée en ce que** dans le fond de la rainure ou dans la branche fermée du U des cavités (10), estampages ou similaires tournés vers la construction de bâtiment (6) sont prévue(s), lesquels servent d'élément d'écartement pour le tube (4) de la construction de bâtiment (6) dans l'état intégré et/ou dans les cavités (10) les moyens de fixation (7) peuvent être agencés ou sont prévus pour la fixation au niveau de la construction de bâtiment (6) et/ou du matériau isolant est prévu dans les cavités (10) ou sous celles-ci en direction de la construction de bâtiment (6).

8. Construction porteuse selon l'une ou plusieurs des revendications précédentes, **caractérisée en ce que** le profil présente une hauteur de profil de 20 à 50 mm, de préférence de 30 mm, dans laquelle la distance du tube (4) inséré dans le profil au côté tourné loin de la construction de bâtiment (6) du profil s'élève aussi de préférence à au moins 5 mm et/ou la section de contact (2, 2') est réalisée pour la fixation pour un établissement de contact à grande surface et/ou direct avec la plaque ou couche terminale (9).

9. Construction porteuse selon l'une ou plusieurs des revendications précédentes, **caractérisée en ce que** la ou les sections de contact (2, 2') pour la fixation de la plaque ou couche terminale (9) est/sont prévue(s) directement à côté de la section de retenue (3) et/ou au niveau du profil (1) des surfaces de rayonnement, en particulier au niveau de sections profilées agencées de manière contigue des sections de retenue (3) sont formées et/ou la surface de rayonnement forme simultanément la surface de contact (2, 2'), sur laquelle la plaque terminale (9) peut être agencée sur toute la surface ou à fleur et en particulier à force.

10. Construction porteuse selon l'une ou plusieurs des revendications précédentes, **caractérisée en ce que** le profil (1) est formé de matériau à bonne conduction thermique et/ou le profil (1) est formé de métal, matière plastique, matériau composite ou similaires et/ou le profil (1) est réalisé comme bande profilée ou comme plaque et/ou le profil est réalisé en forme de bande, comme plaque carrée ou rectangulaire et/ou le profil est réalisé de manière métallique, magnétique ou magnétisable et/ou le profil présente une surface adhésive, par exemple une bande Velcro ou surface collante et/ou le profil (1) présente de préférence des plis (5) tournés de préférence vers l'intérieur qui servent d'appui et/ou de moyens de liaison sur ou avec la construction de bâtiment (6) et/ou des moyens améliorant la conduction thermique sont prévus, agencés ou peuvent être agencés sur la surface de contact (2, 2') et/ou dans la rainure.

11. Construction porteuse selon l'une ou plusieurs des revendications précédentes, **caractérisée en ce que** le profil (1) peut être fabriqué dans des longueurs et largeurs standardisées et/ou des moyens de liaison sont prévus pour la liaison de profils (1) à assembler les uns aux autres et/ou des coudages sont prévus comme moyen de liaison qui peuvent venir en prise les uns dans les autres qui servent de préférence simultanément d'appui sur la construction de bâtiment et/ou entre la plaque terminale et le tube une plaque de protection est prévue pour la protection contre les percements et/ou le profil (1) est pourvu au moins partiellement de matériaux complémentaires thermoisolants et/ou les matériaux complémentaires sont réalisés comme plaque métallique avec un noyau en polystyrène, dos en bois ou profil de mousse dure, plaque de mousse dure ou similaires.

12. Chauffage ou refroidissement de plafond ou de paroi, en particulier selon le système de rayonnement de chaleur avec une construction porteuse selon l'une ou plusieurs des revendications précédentes.

13. Chauffage ou refroidissement de plafond ou de paroi selon la revendication 12, **caractérisé en ce que** comme plaque ou couche terminale (9) une plaque favorisant le rayonnement est prévue, de préférence une plaque de parement en plâtre, placoplâtre, plaque de fibre de plâtre ou de fibre de plaque de parement en plâtre et/ou une couche isolante et/ou la couche réfléchissant des rayons thermiques est prévue entre le profil (1) et la construction de bâtiment (6).
